# EUROPEAN PATENT APPLICATION

(11) **EP 1 443 518 A1**
(43) Date of publication of application: **04.08.2004**
(21) Application number: 03290228.0
(22) Date of filing: 29.01.2003
(51) Int. Cl.: G11B 33/04

(54) **Compact disk holder**

(71) Applicant: De Rouvray, John Alexander Loriot, 75007 Paris (FR)
(72) Inventor: De Rouvray, John Alexander Loriot, 75007 Paris (FR)

(57) **Abstract**

A compact disk (CD) holder. The CDs rest in elongated slots cut into bow-shaped base and cover member. A pliable gasket between the members provides friction to retain the CDs.

## Description

### BACKGROUND OF THE INVENTION :

The invention relates to the field of disk holders such as for compact disks. Various types of compact disks are used for entertainment and business, such as listening to music or watching videos, or for operation in a computer. These disks are often replaced and exchanged. This at times is done in a hurry and the disks are merely placed onto a supporting desk or other surface instead of being replaced into their particular jewel case or other type of storage system. Not only is this detrimental to proper care of such disks in that dust, scratches and other contamination may collect on the surface of a disk, but the disks may also be displaced and cannot be found.

Compact disks out of their jewel cases or other types of covers are not very easily handled: they are fragile, sensitive to scratches, and difficult to grab rapidly with no risk of scratching them. Furthermore the jewel cases or other types of covers generally hide the disk and prevent a precise identification of the disk. There are systems for putting away and displaying disks out of their jewel cases or other type of cover: these systems consist of a tray with grooves or recesses on its surface, in such a way that compact disks may stand on their rim in a slightly inclined position. These known systems need to be placed on a horizontal surface and do not maintain the disks in position in case the system is displaced.

The present invention aims at providing a safe temporary storage solution for compact disks that also ensures stability, visibility and accessibility of the disks. The invention can be rapidly displaced with no particular precaution, and allows for an optimal visibility of the disks, thus permitting an immediate selection of a disc without manipulation of the other disks.

### BRIEF DESCRIPTION OF THE FIGURES

Figure 1 is a perspective view of the holder containing several compact disks (CDs).
Figure 2 is a perspective view of the holder.

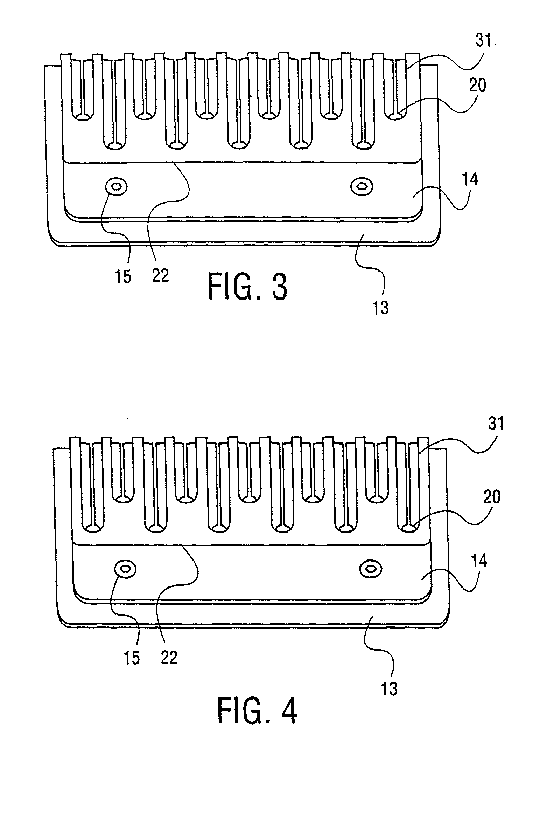

Figure 3 is an elevation view of one side of the holder.
Figure 4 is an elevation view of the opposite side of the holder.
Figure 5 is a side view of the holder.
Figure 6 is a top view of the holder.

### DETAILED DESCRIPTION OF THE INVENTION

A holder for a compact disk or the like is described. The following description includes numerous specific details currently such as specific materials in order to provide a better understanding of the preferred embodiment. It will be apparent to one skilled in the art that the present invention may be practiced without these specific details. In other instances, well-known fabrication techniques have not been described in detail in order not to unnecessarily obscure the invention.

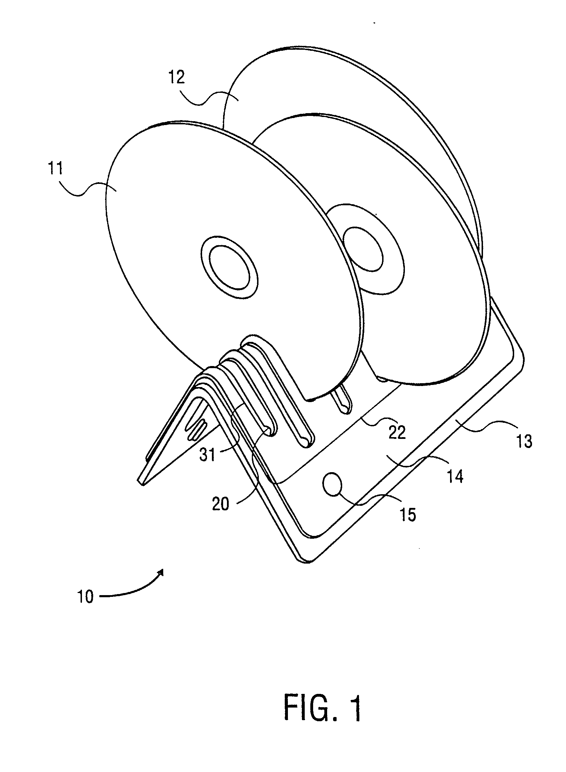

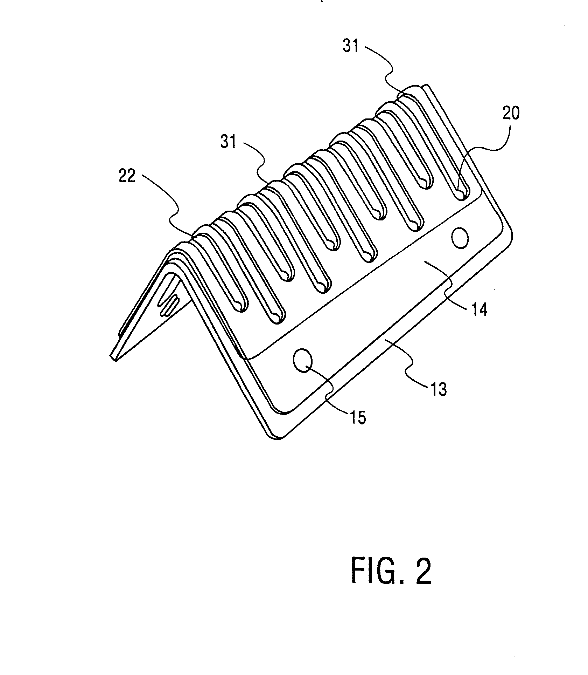

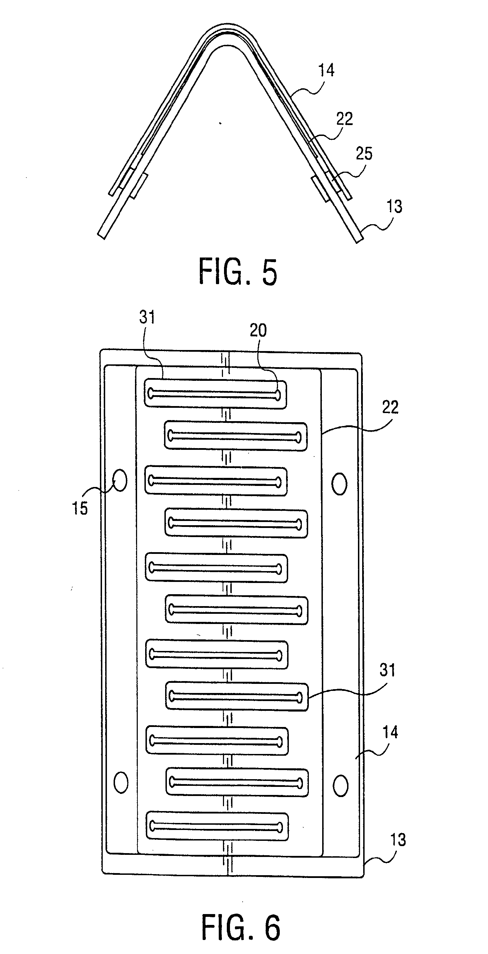

Referring to Figures 1 and 2, the CD holder 10 has a generally bowed shaped base 13 fabricated from, for instance, a coloured transparent or translucent plastic. An overlying, bowed cover member 14 is fastened to the base 13 through four fasteners 15. The cover member 14 may be fabricated from plastic such as sandblasted or frosted plastic. Both the base 13 and cover member 14 can be fabricated from other materials such as metal. A gasket 22 best seen in Figures 5 and 6 is disposed between the base 13 and cover member 14.

A plurality of elongated slots 31 are disposed through, an aligned in both the base 13 and cover member 14. The slots 31 have a width which is several times greater than the width of a typical CD, for instance, four or five times the width of a CD.

Alternate slots 31 extend downward a greater distance on one side of the CD holder than the other. Because of this, when a CD is engaging a slot 31, it stands either to the right or left of the center of the bow-shaped base 13 and cover member 14. Thus, as best seen in Figure 1, the CDs are asymmetrically disposed in the holder and extend alternately to one side or the other. This enable the CDs to be more readily inserted and removed from the holder in addition to being more visible thereby allowing easier identification.

Spacers 25 (best seen in Figure 5) separate the base 13 from the cover member 14. The spacers are held in place by the fasteners 25. The spacers 25 have a thickness slightly less than the thickness of the gasket 22 which is disposed between the base 13 and the cover member 14. In this way, the gasket is held in place.

Slots 20 are cut in the gasket (best seen in Figure 6). The slots 20 are centered on the slots 31 and form an opening which is less than the thickness of a CD. In this manner, when a CD is inserted into the holder within the slot 20, it brushes against the gasket. The friction between the gasket and the CD causes the CD to be held securely in place within the holder without causing any damage to the CD. The gasket can be fabricated from a pliable and scratch resistant material such as neoprene.

The fasteners 15 may be ordinary bolts or T-nuts. In lieu of fasteners, the base and cover member can be held together with welds, glue, press fit fixtures or other know techniques.

## Claims

1. A disk holder comprising:
a generally bow-shaped base having a plurality of elongated first slots;
a bow-shaped cover member disposed over the base having a plurality of elongated second slots aligning with the first slots;
a gasket disposed between the base and the cover member.

2. The disk holder defined by claim 1, wherein the width of the first and second slots is greater than the width of the disk.

3. The disk holder defined by claim 2, wherein alternate ones of the first and second slots extend downwardly a greater distance on one side of the base and cover member than on the other side.

4. The disk holder defined by claim 1 or 3, wherein the gasket member includes a plurality of elongated openings centered on the first and second slots.

5. The disk holder defined by claim 4, wherein the openings have a width less than a thickness of the disk.

6. The disk holder defined by claim 5, wherein the gasket comprises a pliable material.

7. The disk holder defined by claim 6, including fasteners for holding together the base and cover.

8. The disk holder defined by claim 7, wherein the base and cover are plastic.

9. The disk holder defined by claim 8, wherein the disk is a compact disk.
